# EUROPEAN PATENT APPLICATION

(11) **EP 4 632 975 A1**
(43) Date of publication of application: **15.10.2025**
(21) Application number: 25169840.3
(22) Date of filing: 10.04.2025
(51) Int. Cl.: H02G 3/12, H02G 3/14

(54) **ELECTRICAL WIRING DEVICE MOUNTABLE ON A WALL**

(30) Priority: 10.04.2024 IN 202431029099
(71) Applicant: SCHNEIDER ELECTRIC INDUSTRIES SAS, 92500 Rueil-Malmaison (FR)
(72) Inventor: THODIYIL, Babish, 560067 Bangalore (IN); PATIL, Vijay Kumar, 560073 Bangalore (IN); NG, Raghavendra, 560040 Bangalore (IN)
(74) Representative: Lavoix

(57) **Abstract**

Embodiments herein provide an electrical wiring device (1) mountable on a wall (2). The electrical wiring device (1) includes an installation box (3) mountable on the wall (2), box mounting screws (4) to mount the installation box (3) on the wall (2), a fixing frame assembly (5) comprising a claw (8), a claw screw (9), an key aperture (10), and an reinforcement metal part assembly (11) rotatable over a pivot (12), and a cover frame assembly (6) to hold the fixing frame assembly (5). The claw (8) and the claw screw (9) are provided at same position of the fixing frame assembly (5). The reinforcement metal part assembly (11) is rotatable by the pivot (12) in the fixing frame assembly (5) to enable access to the claw screw (9) for installation of the electrical wiring device (1) by the claw (8).

## Description

### FIELD OF INVENTION

The invention relates to switch assembly, and more particularly to a installation of electrical or electronic wiring devices into an installation box through the utilization of a claw or screw in various markets.

### BACKGROUND

The most common methods of installing wiring devices in an installation box mounted on or in a wall are screw installation and claw installation. Screw installation involves using a screw provided in the installation box and a keyhole provided in a fixing frame to install the wiring device. Claw installation, on the other hand, is used depending on the type of switch box pre-installed in the wall or if the keyhole in the fixing frame or box screw area is damaged. The claw system provided with the fixing frame is used in such cases.

Some markets have round installation boxes where wiring devices can only be installed using the claw feature due to the unavailability of the screw mounting feature in the box. However, most switch boxes have both the screw and claw installation features to enable installation at the same position.

When it comes to plastic fixing frames, they are delivered with a key-shaped hole at the top and bottom and a claw on the right and left. This is done to ensure that the fixing frame remains structurally strong. If the screw and claw installation are provided at the same place, the fixing frame becomes structurally weak, and it may break when torque is applied during installation, causing complete product failure.

The conventional switch structures have issues particularly with respect to the positions of the keyhole and screw installation feature. When the metal part is reinforced to the keyhole, it blocks the access of the claw screw, making claw installation difficult or impossible until the metal reinforcement is removed.

It is desired to address the above-mentioned disadvantages or other short comings or at least provide a useful alternative.

### OBJECT OF INVENTION

The principal object of the embodiments herein is to provide an electrical wiring device mountable on a wall. To address the challenge of the fixing frame assembly, the proposed solution incorporates a keyhole mechanism and screw installation feature at a specific position, resulting in a compact and versatile design compatible with all types of flush mounting and surface mounting boxes.

Another object of the embodiments herein is to position a rotary metal reinforcement assembly above the key aperture, thereby reinforcing the area during screw installation. This reinforcement assembly can be made rotatable by incorporating a pivot in the fixing frame assembly, which facilitates access to the claw screw for the installation of the claw.

### SUMMARY

In one aspect the object is satisfied by providing an electrical wiring device mountable on a wall. The electrical wiring device includes an installation box mountable on the wall,
box mounting screws to mount the installation box on the wall, a fixing frame assembly comprising a claw, a claw screw, an key aperture to hold the installation box, and an reinforcement metal part assembly rotatable over a pivot, and a cover frame assembly comprising a plurality of clippings to hold the fixing frame assembly. The claw and the claw screw are provided at same position of the fixing frame assembly. The reinforcement metal part assembly is rotatable by the pivot in the fixing frame assembly to enable access to the claw screw for installation of the electrical wiring device by the claw.

In an embodiment, the fixing frame assembly includes a docking assembly for both the fixing frame assembly and the reinforcement metal part assembly, an insert assembly which is fixed to the installation box during the installation, a cantilever spring to retain the reinforcement metal part assembly in a preloaded condition and avoid interaction between the box mounting screws, a rotary stopper to stop the reinforcement metal part assembly to enable pushing while accessing the claw screw, a plurality of ribs to cover and secure a defined position of the claw for entry to the installation box, claw locking dimples provided at both side of the claw to sit in the defined position in the fixing frame assembly, and a cantilever pivot beam for deflection of the fixing frame assembly using the cantilever spring to ease the reinforcement metal part assembly.

In an embodiment, the reinforcement metal part assembly includes a pivot hole, a claw screw relief member to provision access to a screw driver for rotating the reinforcement metal part assembly, a sheet metal acting angle member, and an entry wedge for inserting and snapping in the fixing the pivot. The cantilever spring pushes the sheet metal acting angle member for loading of the reinforcement metal part assembly, and wherein movement of the reinforcement metal part assembly is stopped by the rotary stopper by the stopper in the fixing frame assembly. Further, the rotated reinforcement metal part assembly is positioned back in the preloaded condition with the cantilever spring.

In an embodiment, the reinforcement metal part assembly is assembled to the fixing frame assembly by sliding from a front side with help of the pivot.

In an embodiment, the box mounting screws and the claw screw are positioned at different heights so that the claw screw is not uninstall when the box mounting screws are installed.

In an embodiment, a pitch of the claw is defined to provide access to the claw screw without removing a center plate or rocker.

In an embodiment, the reinforcement metal part assembly is placed above the key aperture to reinforce area while installation of the box mounting screws.

In an embodiment, the reinforcement metal part assembly is rotated using a screw driver tool placed by a user.

In an embodiment, the electrical wiring device includes a center to facilitate the clipping of the cover frame assembly in a direction of the installation.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the scope thereof, and the embodiments herein include all such modifications.

### BRIEF DESCRIPTION OF FIGURES

The proposed control device is illustrated in the accompanying drawings, throughout which like reference letters indicate corresponding part in the various figures. The embodiments herein will be better understood from the following description with reference to the drawings, in which:
FIG. 1a illustrates a front view of an electrical wiring device mountable on a wall, according to embodiments as disclosed herein;
FIG. 1b illustrates a rear view of the electrical wiring device, according to embodiments as disclosed herein;
FIG. 1c illustrates an assembled view of the electrical wiring device, according to embodiments as disclosed herein;
FIGS. 2a-2c illustrate the fixing frame assembly and cover frame assembly, according to embodiments as disclosed herein;
FIGS. 3a-3e illustrate the fixing frame assembly, according to embodiments as disclosed herein;
FIG. 4 illustrates a reinforcement metal part assembly, according to embodiments as disclosed herein;
FIG. 5 illustrates the claw with other components of the electrical wiring device, according to embodiments as disclosed herein;
FIGS. 6a-6c illustrate variable alternates of the electrical wiring device, according to embodiments as disclosed herein; and
FIG. 7 illustrates multi gang compatibility of the electrical wiring device, according to embodiments as disclosed herein.

Further, those of ordinary skill in the art will appreciate that elements in the drawing are illustrated for simplicity and may not have been necessarily drawn to scale. For example, the dimension of some of the elements in the drawing may be exaggerated relative to other elements to help to improve the understanding of aspects of the invention. Furthermore, the one or more elements may have been represented in the drawing by conventional symbols, and the drawings may show only those specific details that are pertinent to the understanding the embodiments of the invention so as not to obscure the drawing with details that will be readily apparent to those of ordinary skill in the art having benefit of the description herein.

### DETAILED DESCRIPTION OF INVENTION

The implementations herein and the various features and advantageous details thereof are explained more fully with reference to the non-limiting implementations that are illustrated in the accompanying drawings and detailed in the following description. It should be understood, however, that the following descriptions, while indicating preferred implementations and numerous specific details thereof, are given by way of illustration and not of limitation. Many changes and modifications may be made within the scope of the implementations herein without departing from the spirit thereof, and the implementations herein include all such modifications. The examples used herein are intended merely to facilitate an understanding of ways in which the implementations herein can be practiced and to further enable those skilled in the art to practice the implementations herein. Accordingly, the examples should not be construed as limiting the scope of the implementations herein.

Descriptions of well-known components and processing techniques are omitted so as to not unnecessarily obscure the implementations herein. Also, the various implementations described herein are not necessarily mutually exclusive, as some implementations can be combined with one or more other implementations to form new implementations.

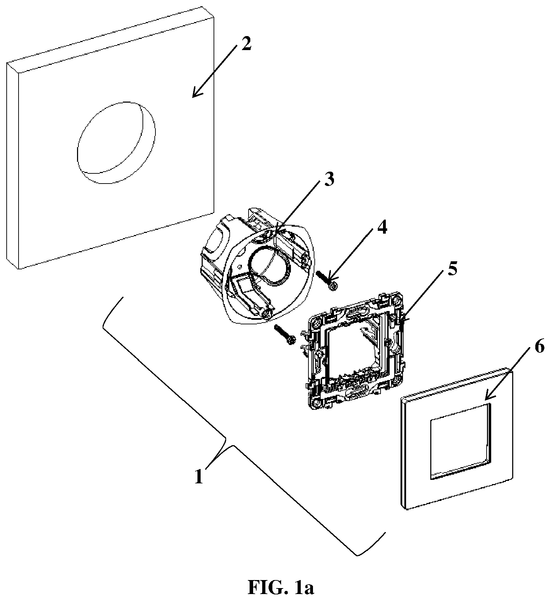

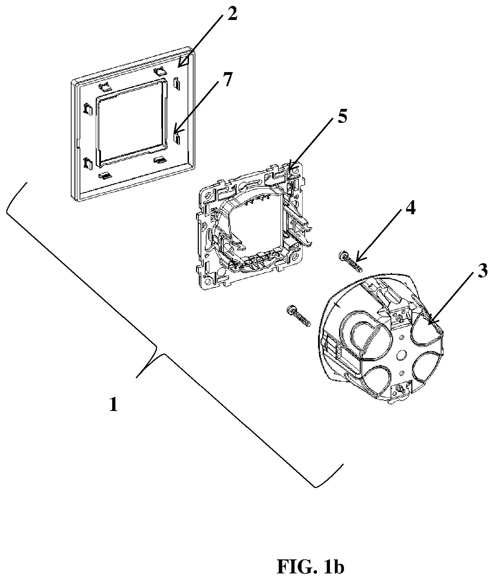

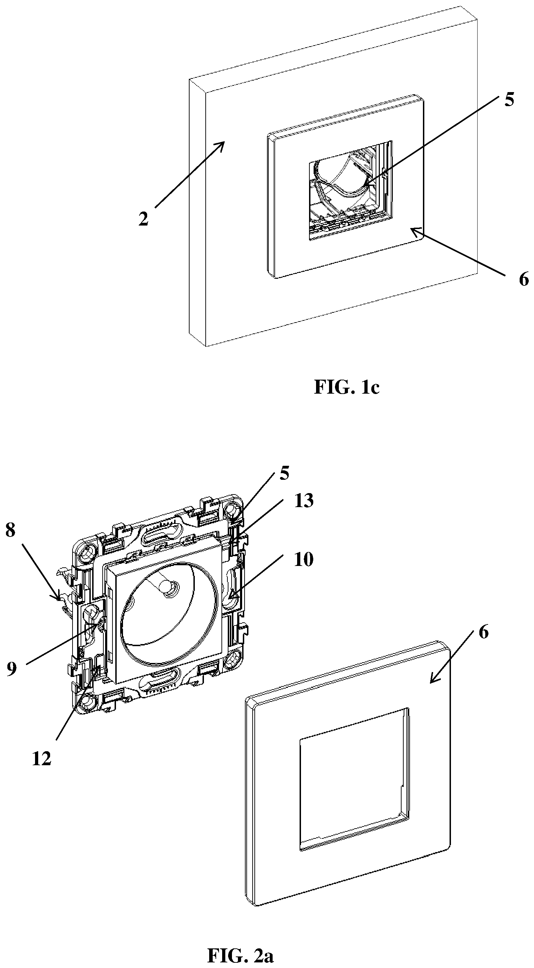

Referring now to the drawings, and more particularly to FIGS. 1 through 7, where similar reference characters denote corresponding features consistently throughout the figures, there are shown preferred implementations. Further, for the sake of simplicity, and without limitation, the same numbers are used throughout the drawings to reference like features and components. The implementations herein will be better understood from the following description with reference to the drawings.

FIG. 1a illustrates a front view of an electrical wiring device (1) mountable on a wall (2), according to embodiments as disclosed herein. FIG. 1b illustrates a rear view of the electrical wiring device (1), according to embodiments as disclosed herein. The electrical wiring device (1) includes an installation box (3) mountable on the wall (2), box mounting screws (4) to mount the installation box (3) on the wall (2), a fixing frame assembly (5), and a cover frame assembly (6) comprising a plurality of clippings (7) to hold the fixing frame assembly (5). FIG. 1c illustrates an assembled view of the electrical wiring device (1), according to embodiments as disclosed herein.

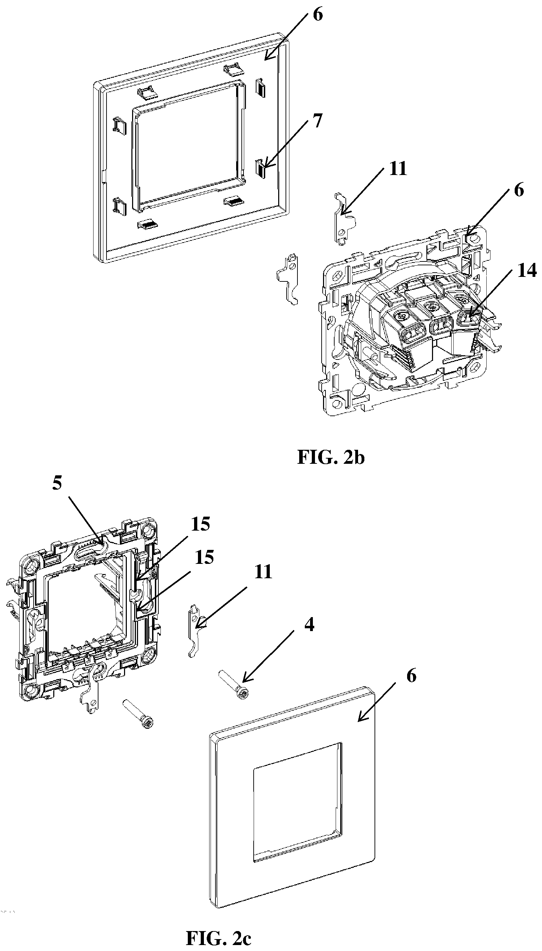

FIGS. 2a-2c illustrates the fixing frame assembly (5) and the cover frame assembly (6), according to embodiments as disclosed herein. The fixing frame assembly (5) includes a claw (8), a claw screw (9), a key aperture (10) to hold the installation box (3), and a reinforcement metal part assembly (11) rotatable over a pivot (12). The claw (8) and the claw screw (9) are provided at same position of the fixing frame assembly (5). The reinforcement metal part assembly (11) is rotatable by the pivot (12) in the fixing frame assembly (5) to enable access to the claw screw (9) for the installation of the electrical wiring device (1) by the claw (8).

The primary objective of the present invention is to offer an elegant and efficient solution that is both compact and cost-effective. Specifically, it allows for the installation of both claw and screw at the same position of the fixing frame assembly. To achieve this, a rotary reinforcement metal part assembly (11) is placed above the key aperture (10) to strengthen the area during screw installation. The reinforcement metal part assembly (11) is made rotatable by incorporating a pivot (12) in the fixing frame assembly (5), which enables easy access to the claw screw (9) during product installation via the claw (8). The user can effortlessly rotate the reinforcement metal part assembly (11) by placing the screwdriver, which provides access for the claw screw (9).

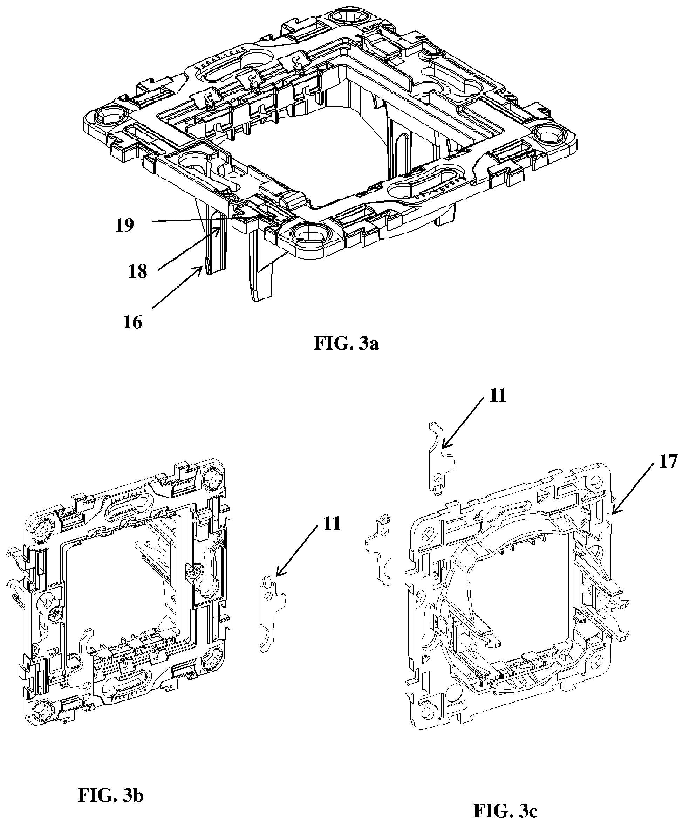

FIGS. 3a-3e illustrates the fixing frame assembly (5), according to embodiments as disclosed herein. The fixing frame assembly (5) includes a cantilever spring (13), an insert assembly (14), a rotary stopper (15), a plurality of ribs (16), a docking assembly (17), and claw locking dimples (18).

The docking assembly (17) is provided for both the fixing frame assembly (5) and the reinforcement metal part assembly (11). The insert assembly (14) is fixed to the installation box (3) during the installation. The cantilever spring (13) retains the reinforcement metal part assembly (11) in a preloaded condition and avoid interaction between the box mounting screws (4). The rotary stopper (15) is provided to stop the reinforcement metal part assembly (11) to enable pushing while accessing the claw screw (9). The plurality of ribs (16) are used to cover and secure a defined position of the claw (8) for entry to the installation box (3). The claw locking dimples (18) are provided at both side of the claw (8) to sit in the defined position in the fixing frame assembly (5). Further, the cantilever pivot beam (19) is provided for deflection of the fixing frame assembly (5) using the cantilever spring (13) to ease the reinforcement metal part assembly (11). The inbuilt pivot gives rotary motion (20) for the reinforcement metal part assembly (11).

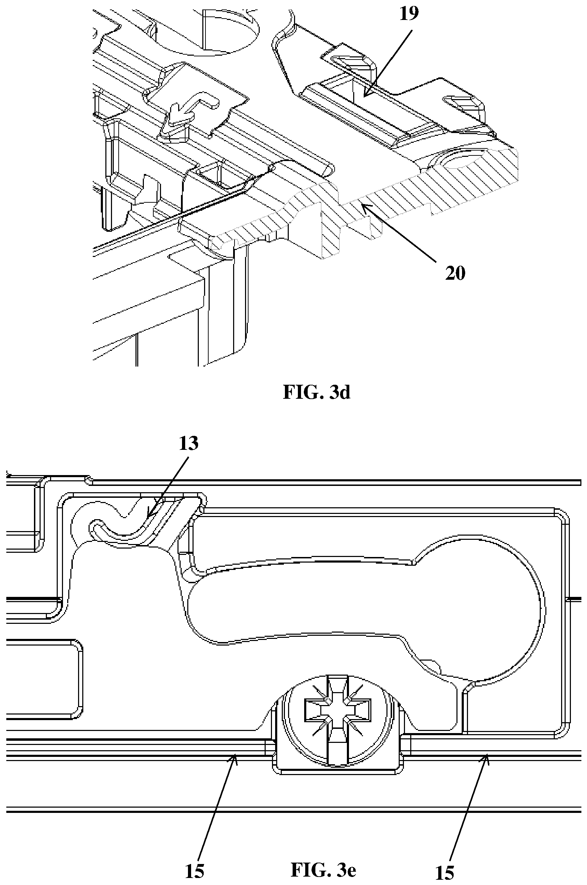

FIG. 3d illustrates variable hinging cantilever pivot (12) beam, according to embodiments as disclosed herein. FIG. 3e illustrates the cantilever spring (13) and the rotary stopper (15), according to embodiments as disclosed herein.

The fixing frame assembly (5) incorporates the cantilever spring (13) that securely holds the reinforcement metal part assembly (11) in place, preventing any interference with the box mounting screws. This innovative design allows to deliver fixing frame assembly (5) with claw (8) mounted from the factory along with key aperture (10), installer need not to remove the claw kit during the screw installation. The result is a more flexible installation process that can be adapted to the installer's preferences. Furthermore, this solution is compatible with all modular boxes available in the market and is cost-effective due to its simple construction, making it affordable for all.

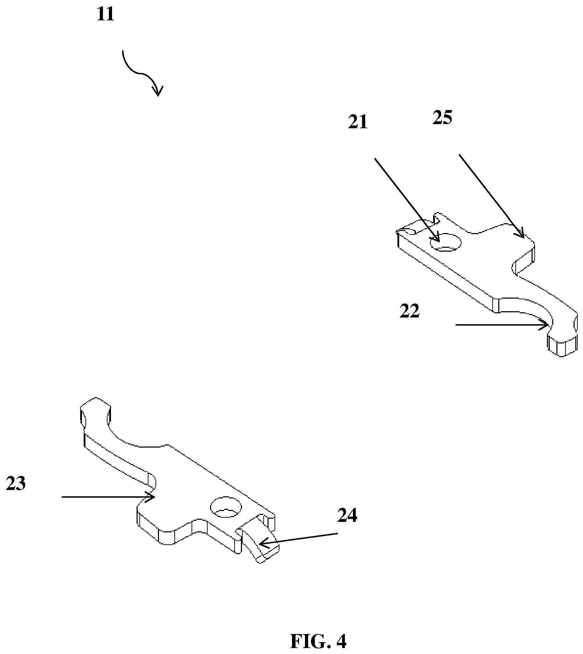

FIG. 4 illustrates the reinforcement metal part assembly (11), according to embodiments as disclosed herein. The reinforcement metal part assembly (11) includes a pivot hole (21), a claw screw relief member (22), a sheet metal acting angle member (23), and an entry wedge (24). The claw screw relief member (22) provisions access to a screw driver for rotating the reinforcement metal part assembly (11). The entry wedge (24) is used for inserting and snapping in the fixing the pivot (12). The cantilever spring (13) pushes the sheet metal acting angle member (23) for loading of the reinforcement metal part assembly (11), The movement of the reinforcement metal part assembly (11) is stopped by the rotary stopper (15) by the stopper in the fixing frame assembly (5). This metal part (25) gives rotary motion and gives strength for plastic. The rotated reinforcement metal part assembly (11) is positioned back in the preloaded condition with the cantilever spring (13).

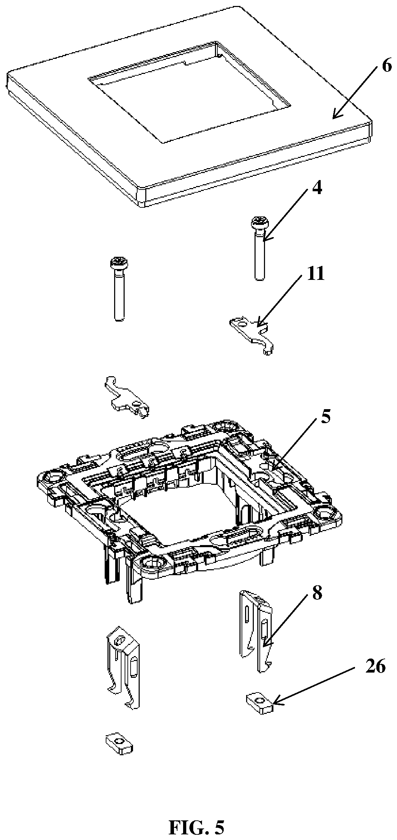

FIG. 5 illustrates the claw (8) with other components of the electrical wiring device (1) including a nut (26), according to embodiments as disclosed herein.

The assembly of a reinforcement metal part (11) serves to strengthen the key hole area of the fixing frame assembly (5). This metal part is integrated into the fixing frame assembly (5) using a pivot feature (12), allowing it to rotate when necessary to access the claw hole screw for claw installation. The reinforcement metal part assembly (11) is attached to the fixing frame assembly (5) by sliding it in from the front with the aid of a flexible pivot feature (12), either manually or with the use of hand tools. The entry wedge (24) of the reinforcement metal part assembly (11) provides a pivot insertion angle, which facilitates easy insertion and snapping into the fixing frame pivot (12). Additionally, the fixing frame assembly (5) features a variable cantilever pivot beam (19), which ensures proper deflection of the assembly to make the integration of the reinforcement metal part assembly (11) easier.

The fixing frame assembly (5) is equipped with a cantilever spring (13) which serves to retain the reinforcement metal part assembly (11) in its initial position. Without this feature, the key aperture (10) screw from the box could potentially collide with the reinforcement metal part assembly (11) if it is not held in place. By preloading the reinforcement metal part assembly (11), the cantilever spring (13) enables the installer to easily access the claw hole screw and push it into place. Additionally, the cantilever spring (13) ensures proper loading and prevents the metal part from rotating beyond a certain point, thanks to the stopper in the fixing frame assembly (5).

The fixing frame assembly (5) also features plastic ribs (16) to securely hold the claw (8) in place and enable easy entry into round and square boxes available in the market. The claw (8) can be actuated and opened to the desired position by applying torque to the claw screw, aided by the wedge angle provided in the assembly.

To prevent any interference between the claw screw (9) and the box mounting screws (4), both are positioned at different heights. This eliminates the need for the installer to remove the claw from the product when installing it with the box mounting screws (4). Additionally, dimples (18) are provided on both sides of the claw (8) to ensure it sits in the defined position in the fixing frame assembly (5) and to address any play while in use.

In an embodiment, a pitch of the claw (8) is defined to provide access to the claw screw (9) without removing a center plate or rocker.

The designed claw (5) allows easy access to the claw screw (9) without the need to remove a center plate or rocker. This design feature ensures that there is no interference with modular inserts, such as switches and sockets. The pitch of the assembly is flexible, accommodating both round and square boxes available in the market. Additionally, a reinforcement metal part assembly (11) is strategically placed above the key aperture (10) to reinforce the area during the installation of the box mounting screws (4). The fixing frame assembly (5) can be installed with ease when the insert (14) is pre-assembled (factory mounted) in the fixing frame assembly (5). Finally, the cover frame assembly (6) can be positioned without affecting the cover frame snaps, ensuring compliance with wall regulations.

The conventual designs encounters certain challenges and requirements that need to be addressed. Firstly, there is currently no solution available to install both the claw and screw simultaneously without compromising the strength of the fixing frame. Secondly, the presence of the claw screw head in the fixing frame may result in a collision with the installation box screw head. Thirdly, there is a lack of rotary mechanism for metal reinforcement. Fourthly, a simple and cost-effective metal reinforcement is required. Additionally, the design and development cost for different fixing frames is high. Finally, there is a need to provide access to the claw screw without removing the metal reinforcement.

The proposed solution boasts a plethora of benefits, including a compact design, cost-effectiveness, and simplified installation without the need for a dedicated fixing frame. Its robustness and versatility allow it to be suitable for both round and square installation boxes, while also providing easy access to claw screws without the need to remove the center plate. Additionally, its quick installation process makes it a highly desirable option.

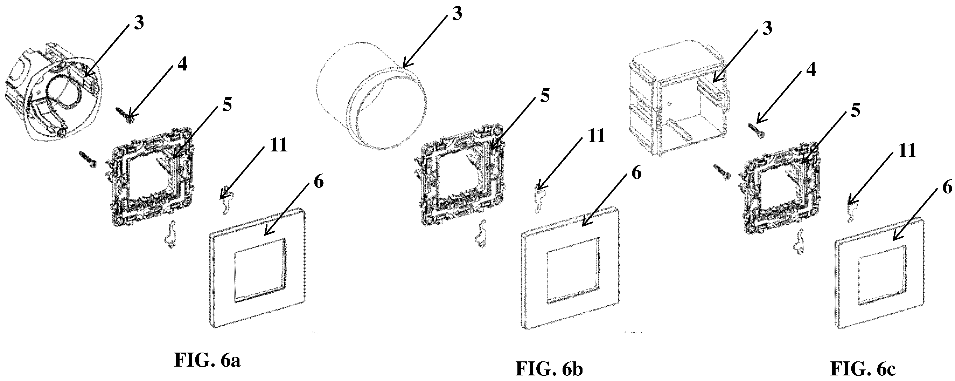

FIGS. 6a-6c illustrates variable alternates of the electrical wiring device (1), according to embodiments as disclosed herein. The embodiments disclosed herein are exemplified in FIGS 6a-6c, which depict variable alternates of the electrical wiring device (1). This innovative solution boasts compatibility with all modular boxes available in the CEE60 market, making it a cost-effective option. The construction of the device is simple and straightforward, resulting in affordability throughout the CEE60 market. Additionally, the device features a fixing frame reinforcement with a rotary mechanism and is compatible with all CEE60 boxes installed with claw and screw.

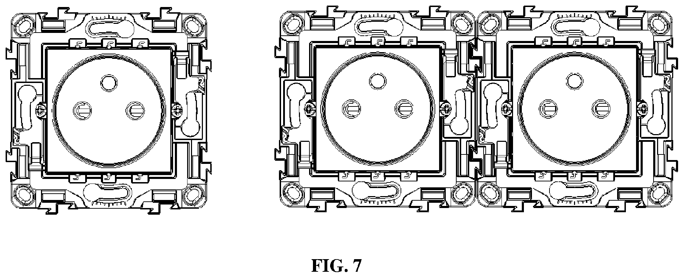

FIG 7 demonstrates the multi-gang compatibility of the electrical wiring device (1) in accordance with the disclosed embodiments. The adaptive center plate features a docking mechanism that accommodates both sheet metal and fixing frame assembly (5) without requiring any modifications to the existing CEE60 design range. This facilitates the mounting and installation of multi-gang solutions.

The invention pertains to enclosures in the wiring devices that are mounted on walls. The installation box is affixed to the wall using screws, and the insert and grid frame assembly is fixed to the box. The center plate adapter is attached to the CEE60 frame, and the installation cover frame is secured to the fixing frame for a polished look.

The adaptive center plate component of the invention boasts snap features that secure it in the cover frame snaps and modular docking features that align and fix multigang insert installations. The design accommodates both plastic and metal fixing frame docking, with clipping features on both sides providing universal clipping to the system for easy assembly and disassembly.

The invention incorporates a common clipping system that prevents wear and tear of the cover frame clips when mounted on metallic elements. A metal click-in edge is provided to meet regulatory requirements for the cover frames. To prevent screw or nail head obstacles in the system, a submerged feature is included in the sheet metal fixing frame.

The introduction of the reinforcement metal part assembly, profiled and designed with an entry wedge acting angle, and screw relied upon, facilitates screwdriver access for claw installation. The reinforcement metal part assembly is then retracted back into position with a spring balancer acting on the angle and fixing frame stopper, ensuring the exact position of the sheet metal part. The sheet metal wedge angle and the fixing frame variable hinge cantilever pivot beam enable the easy assembly of the sheet metal part, with the cantilever beam arresting the five degrees of freedom of the sheet metal part, thereby enabling the intended rotary movement.

The claw screw is positioned below or in line with the wall level, transferring deflection to the inside strengthening ribs rather than the cover frame snapping or fixing frame docking functional surface. The fixing frame feature includes robust keyholes, screw or nail head submerged features in the WD module, which help to submerge screw or nail heads to avoid obstacles during installation. The claw is protected with provided ribs, and the initial position of the claw is locked with a dimple on the fixing frame ribs.

The process of CEE60 installation can be converted to a modular system by replacing the adaptive center plate with a new one that facilitates cover frame clipping and snaps in the direction of installation, bringing the cover frame regulation system to a modular system. To revert to a CEE60 solution, only one center plate needs to be changed.

The invention includes a multi-positioned cover frame click-in feature with soft material to prevent wear and tear of the cover frame snaps. It is assembled from the backside, with rigid support and connection made by a clip that withstands larger pull-out forces of the cover frame assembly.

The foregoing description of the specific implementations will so fully reveal the general nature of the implementations herein that others can, by applying current knowledge, readily modify and/or adapt for various applications without departing from the generic concept, and, therefore, such modifications and adaptations should and are intended to be comprehended within the meaning and range of equivalents of the disclosed implementations. It is to be understood that the phraseology or terminology employed herein is for the purpose of description and not of limitation. Therefore, while the implementations herein have been described in terms of preferred implementations, those skilled in the art will recognize that the implementations herein can be practiced with modification within the spirit and scope of the implementations as described herein.

### List to reference numerals:

| **Sr. No.** | **Description** |
|---|---|
| 1 | electrical wiring device |
| 2 | wall |

| | |
|---|---|
| 3 | installation box |
| 4 | box mounting screws |
| 5 | fixing frame assembly |
| 6 | cover frame assembly |
| 7 | clippings |
| 8 | claw |
| 9 | claw screw |
| 10 | key aperture |
| 11 | reinforcement metal part assembly |
| 12 | pivot |
| 13 | cantilever spring |
| 14 | insert assembly |
| 15 | rotary stopper |
| 16 | ribs |
| 17 | docking assembly |
| 18 | claw locking dimples |
| 19 | cantilever pivot beam |
| 20 | rotary motion |
| 21 | pivot hole |
| 22 | claw screw relief member |
| 23 | sheet metal acting angle member |
| 24 | entry wedge |
| 25 | metal part |
| 26 | nut |

## Claims

1. An electrical wiring device (1) mountable on a wall (2), comprising:
an installation box (3) mountable on the wall (2);
box mounting screws (4) to mount the installation box (3) on the wall (2);
a fixing frame assembly (5) comprising a claw (8), a claw screw (9), an key aperture (10) to hold the installation box (3), and an reinforcement metal part assembly (11) rotatable over a pivot (12), wherein the claw (8) and the claw screw (9) are provided at same position of the fixing frame assembly (5); and
a cover frame assembly (6) comprising a plurality of clippings (7) to hold the fixing frame assembly (5),
wherein the reinforcement metal part assembly (11) is rotatable by the pivot (12) in the fixing frame assembly (5) to enable access to the claw screw (9) for installation of the electrical wiring device (1) by the claw (8).

2. The electrical wiring device (1) as claimed in claim 1, wherein the fixing frame assembly (5) comprises:
a docking assembly (17) for both the fixing frame assembly (5) and the reinforcement metal part assembly (11);
an insert assembly (14), wherein the insert assembly (14) is fixed to the installation box (3) during the installation;
a cantilever spring (13) to retain the reinforcement metal part assembly (11) in a preloaded condition and avoid interaction between the box mounting screws (4);
a rotary stopper (15) to stop the reinforcement metal part assembly (11) to enable pushing while accessing the claw screw (9);
a plurality of ribs (16) to cover and secure a defined position of the claw (8) for entry to the installation box (3);
claw locking dimples (18) provided at both side of the claw (8) to sit in the defined position in the fixing frame assembly (5); and
a cantilever pivot beam (19) for deflection of the fixing frame assembly (5) using the cantilever spring (13) to ease the reinforcement metal part assembly (11).

3. The electrical wiring device (1) as claimed in claim 2, wherein the reinforcement metal part assembly (11) comprises:
a pivot hole (21);
a claw screw relief member (22) to provision access to a screw driver for rotating the reinforcement metal part assembly (11);
a sheet metal acting angle member (23); and
an entry wedge (24) for inserting and snapping in the fixing the pivot (12),
wherein the cantilever spring (13) pushes the sheet metal acting angle member (23) for loading of the reinforcement metal part assembly (11), and wherein movement of the reinforcement metal part assembly (11) is stopped by the rotary stopper (15) by the stopper in the fixing frame assembly (5), and
wherein the rotated reinforcement metal part assembly (11) is positioned back in the preloaded condition with the cantilever spring (13).

4. The electrical wiring device (1) as claimed in any one of the preceding claims, wherein the reinforcement metal part assembly (11) is assembled to the fixing frame assembly (5) by sliding from a front side with help of the pivot (12).

5. The electrical wiring device (1) as claimed in any one of the preceding claims, wherein the box mounting screws (4) and the claw screw (9) are positioned at different heights so that the claw screw (9) is not uninstall when the box mounting screws (4) are installed.

6. The electrical wiring device (1) as claimed in any one of the preceding claims, wherein a pitch of the claw (8) is defined to provide access to the claw screw (9) without removing a center plate or rocker.

7. The electrical wiring device (1) as claimed in any one of the preceding claims, wherein the reinforcement metal part assembly (11) is placed above the key aperture (10) to reinforce area while installation of the box mounting screws (4).

8. The electrical wiring device (1) as claimed in any one of the preceding claims, wherein the reinforcement metal part assembly (11) is rotated using a screw driver tool placed by a user.

9. The electrical wiring device (1) as claimed in any one of the preceding claims, comprises a center to facilitate the clipping of the cover frame assembly (6) in a direction of the installation.
